# EUROPÄISCHE PATENTANMELDUNG

(11) **EP 4 686 938 A1**
(43) Veröffentlichungstag der Anmeldung: **04.02.2026**
(21) Anmeldenummer: 24191531.3
(22) Anmeldetag: 29.07.2024
(51) Int. Cl.: G01N 27/404, G01N 27/416

(54) **VERWENDUNG UND VERFAHREN ZUR ZUSTANDSERFASSUNG EINES ELEKTROCHEMISCHEN SENSORS UND KORRESPONDIERENDER ELEKTROCHEMISCHER SENSOR**

(71) Anmelder: Testo SE & Co. KGaA, 79822 Titisee-Neustadt (DE)
(72) Erfinder: STEINER, Gregor, 79822 Titisee-Neustad (DE); KNEER, Janosch, 79115 Freiburg (DE); LIEBETRAUT, Peter, 79194 Gundelfingen (DE)
(74) Vertreter: Mertzlufft-Paufler, Cornelius

(57) **Zusammenfassung**

Die Erfindung betrifft die Verwendung einer mit einer Spannung zwischen zwei Elektroden korrelierenden Größe eines elektrochemischen Sensors (1) zur Erfassung seines Betriebszustands. Die Erfindung betrifft weiterhin, ein Verfahren zur Erfassung des Betriebszustandes eines elektrochemischen Sensors (1), wobei eine mit einer Spannung zwischen Referenzelektrode (3) und Gegenelektrode (4) korrelierende Größe erfasst wird. Die Erfindung betrifft zudem eine Vorrichtung eines elektrochemischen Sensors (1) zur Verwendung nach den in den Verfahrensansprüchen beschriebenem Verfahren.

## Beschreibung

Bei der Erfindung handelt es sich um die Verwendung einer mit einer Spannung zwischen zwei Elektroden korrelierenden Größe eines elektrochemischen Sensors zur Erfassung seines Betriebszustands.

Des Weiteren beschäftigt sich die Erfindung mit einem Verfahren zur Erfassung eines Betriebszustands eines elektrochemischen Sensors, wobei der Sensor wenigstens eine Sensingelektrode, eine Gegenelektrode und eine Referenzelektrode umfasst.

Die Erfindung betrifft weiterhin eine Vorrichtung zur Verwendung eines nach den Verfahrensansprüchen bezeichneten Verfahrens.

Derartige elektrochemische Sensoren sind bekannt und werden beispielsweise zur Sauerstoffmessung in der Luft oder bei der Ammoniakmessung zur Überwachung von Prozessen verwendet. Insbesondere werden elektrochemische Sauerstoffsensoren unter anderem im Bereich der Personensicherheit, in der Emissions- und Abgasmesstechnik in portablen und stationären Geräten eingesetzt.

Es hat sich herausgestellt, dass diese Sensoren durch die Benutzung, aufgrund von Alterungsprozessen und/oder durch fehlerhafte Handhabung in ihrer Leistung abfallen können.

Der Erfindung liegt der Aufgabe zugrunde, den Betriebszustand eines Sensors einfach zu erfassen.

Diese Aufgabe wird durch die Verwendung einer mit einer Spannung zwischen zwei Elektroden korrelierenden Größe eines elektrochemischen Gassensors zur Erfassung seines Betriebszustands gelöst. Somit kann die charakteristische Größe zur Bestimmung und Bewertung des Sensorzustands verwendet werden und Aussagen über den Zustand des Sensors getroffen werden. Dies ermöglicht eine einfache Bewertung des Betriebszustands des elektrochemischen Sensors in eingebautem Zustand und/oder ohne komplexe Messaufbauten oder Versuchsreihen.

Alternativ oder zusätzlich sind zur Lösung der genannten Aufgabe erfindungsgemäß die Merkmale des nebengeordneten, auf ein Verfahren gerichteten Anspruchs vorgesehen. Es wird somit zur Lösung der genannten Aufgabe bei Verfahren der eingangs beschriebenen Art erfindungsgemäß vorgeschlagen, dass wenigstens eine mit einer Spannung zwischen der Referenzelektrode und Gegenelektrode korrelierende Größe erfasst wird. Somit lassen sich eine Vielzahl von analytischen Aussagen über den aktuellen und den vorangegangenen Zustand des Sensors gewinnen.

Insbesondere kann die Potentialdifferenz zwischen Gegen- und Referenzelektrode (U_{CE-RE}) als charakteristische Signalgröße dienen, welche durch Umgebungsgrößen wie beispielsweise Temperatur, Feuchtegehalt sowie durch spezifische Störgrößen wie beispielsweise Lösungsmittel-Dämpfe beeinflusst wird. Die Signalgröße ist hierbei für jeden einzelnen Sensor charakteristisch und wird individuell erfasst.

Beispielsweise lassen sich hierdurch Zustände, welche Veränderungen im Sensorgefüge induzieren, frühzeitig erkennen, und Servicemaßnahmen können darauf abgestimmt eingeleitet werden, um somit die Geräteverfügbarkeit für den Kunden zu erhöhen.

Durch die frühzeitige Erkennung und Bestimmung des Sensorzustandes können spezifische Hinweise bei der Geräteverwendung beispielsweise für den Betrieb und die Lagerung ausgegeben werden. Durch die entsprechenden Hinweise zum Zustand des Sensors werden Messungenauigkeiten und/oder die Verringerung von Messgenauigkeiten bewertbar.

Weiterhin ist es ebenso möglich, dass beispielsweise eine nicht-spezifikationsgemäße Lagerung identifiziert oder ein Zustandstrend außerhalb der Spezifikation erkannt werden kann.

Bei einer vorteilhaften Ausgestaltung kann vorgesehen sein, dass die wenigstens eine mit einer Spannung zwischen der Referenzelektrode und der Gegenelektrode korrelierende Größe ausgewertet wird. Somit lassen sich verschiedene Gerätezustände und Einflussfaktoren erkennen und auswerten. Die Zustandserkennung im Gerät erlaubt beispielsweise das Anlegen einer definierten Nutzerstatistik für den Kundendienst. Dadurch können beispielsweise regionsspezifische Lastparameter abgeleitet werden oder wiederkehrende fehlerhafte und/oder beeinträchtigende Gerätelagerung und Gerätepflege beispielsweise bei der Reinigung mit Desinfektionsmitteln ermittelt werden.

Beispielsweise kann die Auswertung durch Vergleich mit einem vorzugsweise hinterlegten Referenzwert durchgeführt werden.

Bei einer vorteilhaften Ausgestaltung kann vorgesehen sein, dass die korrelierende Größe als eine Potentialdifferenz zwischen den wenigstens zwei Elektroden erfasst, insbesondere zwischen wenigstens einer ersten und wenigstens einer zweiten Elektrode und/oder wenigstens einer dritten Elektrode des Sensors ermittelt, wird. Somit ist es möglich, die Potentialdifferenz als charakteristische Signalgröße heranzuziehen, ohne dass eine Unterbrechung des Messbetriebs erforderlich ist und somit eine Regulierung des Sensors im Anschluss benötigt wird.

Zu beobachten ist dabei, dass die Spannungsdifferenz zwischen Referenz- und Gegenelektrode nach Bestromungsunterbrechung oder Abstellen einer Störung ansteigt, wobei nach einer Bestromungsunterbrechung der Strom sinkt, während er bei Auftreten eines Vergiftungsfalles, also einer Kontamination, zunächst sinkt und nach dessen Abebben wieder ansteigt.

Hierbei ist es möglich, verschiedene Schwellenwerte zu definieren, die bestimmte Gegebenheiten des Sensors beziehungsweise des Sensorzustands widerspiegeln.

Bei sehr starker Kontamination des Sensors, beispielsweise mit Lösemitteln, kann eine extrem stark ausgeprägte Verschiebung des Referenzelektrodenpotentials und damit auch der Potentialdifferenz zwischen Gegen- und Referenzelektrode auftreten, so dass der Sensor in eine fehlerhafte Funktion übergeht, bei welcher der Sensor seine Elektrolytflüssigkeit elektrolysiert und im weiteren Verlauf irreversible Schäden am Sensor entstehen können. Zur Abhilfe ist es möglich, einen Schwellenwert zu definieren, bei dem eine temporäre Sicherheitsabschaltung des Sensors erfolgt, um den Übertritt in diese Fehlfunktion zu vermeiden. Dieser Schwellenwert kann zwischen Werten von 400 - 600 mV gegenüber dem Referenzwert beim initialen Sensorabgleich gewählt werden. Eine besonders vorteilhafte Ausgestaltung eines solchen Schwellenwertes liegt bei 450 mV oberhalb des Referenzwertes beim initialen Sensorabgleich.

Bei einer vorteilhaften Ausgestaltung kann vorgesehen sein, dass wenigstens eine erste Elektrode als Referenzelektrode und wenigstens eine zweite Elektrode als Gegenelektrode ausgebildet ist. Somit kann das tatsächliche Stoff- und Transportgeschehen des Sensors gemäß der Faraday-Gesetzmäßigkeiten beschrieben und berechnet werden, und es können charakteristische Kenngrößen des spezifischen Sensors erfasst werden.

Als Referenzelektroden bezeichnet man beispielsweise Elektroden mit einem sowohl konstanten als auch sich schnell und reproduzierbar einstellendem Gleichgewichtspotential. Solche Referenzelektroden werden beispielsweise als Bezugspunkt für die Messung von vorzugsweise relativen Potentialen weiterer Elektroden eingesetzt.

Als Gegenelektrode, auch Gegenelektrode genannt, bezeichnet man in der Elektrochemie beispielsweise eine Elektrode, die in einer elektrochemischen Zelle mit drei Elektroden für voltammetrische Analysen oder andere Reaktionen verwendet wird, bei denen ein elektrischer Strom fließen soll. Die Gegenelektrode unterscheidet sich häufig von der Referenzelektrode, die das elektrische Potenzial festlegt, gegen das andere Potenziale gemessen werden können, und/oder von der Sensingelektrode, an der die Zellreaktion stattfindet.

In einer Ausführung der Erfindung wird als korrelierende Größe direkt die Spannung zwischen der Referenzelektrode und der Gegenelektrode gemessen, vorzugsweise stromlos.

Bei einer vorteilhaften Ausgestaltung kann vorgesehen sein, dass die korrelierende Größe stromlos erfasst wird. Somit wird die eigentliche Messung zwischen Sensingelektrode und Referenzelektrode nicht beeinträchtigt.

Bei einer vorteilhaften Ausgestaltung kann vorgesehen sein, dass die korrelierende Größe in Abhängigkeit von einer zeitlichen Entwicklung erfasst wird. Somit ist es möglich, nicht nur den Zustand des Sensors zu erfassen, sondern auch die Geschwindigkeit, mit der dieser Sensor eine Zustandsänderung durchläuft. Beispielsweise kann das Regenerationsverhalten des Sensors nach einer Kontamination erfasst werden und Aussagen getroffen werden, wann der Sensor wieder vollständig einsatzbereit ist.

Bei einer vorteilhaften Ausgestaltung kann vorgesehen sein, dass die korrelierende Größe im Vergleich mit einem Referenzwert erfasst wird. Somit können auf Basis des Vergleichs der korrelierenden Größe mit dem Referenzwert Schwellwerte definiert werden, die auf ein mögliches Überschreiten von spezifizierten Sensorbedingungen hinweisen. Beispielsweise können diese Schwellwerte in einer Statusanzeige an den Benutzer mittels einer einfachen Darstellung, beispielsweise anhand eines Ampelschemas oder durch ein Warnsignal mitgeteilt werden.

Bei einer vorteilhaften Ausgestaltung kann vorgesehen sein, dass eine Kompensation des wenigstens einen Messwerts stattfindet. Somit kann beispielsweise der Einfluss der Temperatur auf den Messeffekt aufgehoben werden. Es ist ebenso denkbar, dass eine Kompensation der Messergebnisse, die sich aufgrund äußerer Einflüsse wie beispielsweise Kontamination verfälscht haben, durchgeführt wird.

Bei einer vorteilhaften Ausgestaltung kann vorgesehen sein, dass aus der wenigstens einen korrelierenden Größe wenigstens eine Zustandsgröße und/oder Zustandsaussage ermittelt wird. Somit lässt sich durch die Messung auf den Sensorzustand beispielsweis hinsichtlich seiner Feuchte und/oder Elektrolytkonzentration schließen.

Bei einer vorteilhaften Ausgestaltung kann vorgesehen sein, dass aus der wenigstens einen korrelierenden Größe wenigstens eine Umgebungsbedingung und/oder wenigstens eine Einsatzbedingung ermittelt wird. Somit lassen sich Rückschlüsse auf die Lagerung, den Betrieb und akute und/oder kürzlich zurückliegende Kontaminationen durch organische Komponenten des Sensors erkennen.

Beispielsweise können Umgebungsgrößen wie Temperatur, Feuchtegehalt der Luft, sowie spezifische Störgrößen wie beispielsweise Lösungsmittel-Dämpfe ermittelt werden.

Bei einer vorteilhaften Ausgestaltung kann vorgesehen sein, dass wenigstens eine korrelierende Größe aufgezeichnet wird und an wenigstens eine Auswerteeinheit übermittelt wird. Somit können bei Erreichen eines kritischen Schwellenwertes Warnhinweise zu einer Fehlfunktion, eines drohenden Sensordefekts oder Hinweise zur korrekten Geräteverwendung und Lagerung gegeben werden.

Besonders vorteilhaft ist, wenn die Verrechnung und Auswertung der notwendigen Sensorsignale in einer kausalen Abfolge integral erfasst ist und die Verrechnungen möglichst einfach ausgelegt sind, um in die gegebene Mikrocontroller-Architektur eingebunden werden zu können.

Somit kann dies in verschiedenen Signalisierungsformaten, zum Beispiel in Form eines Ampelschemas, an den Benutzer erfolgen.

Eine Statusanzeige beim Eintreten einer Schwellwertüberschreitung wäre im Folgenden in beispielhafter Weise dargestellt:
Das Erreichen einer Zunahme gegenüber dem Produktionsabgleich um bspw. 100 mV entspricht dem Verlassen eines Bereichs klimatisch typischer Benutzungsbedingungen und repräsentiert einen sinnvollen ersten Schwellenwert für Signalisierung und Bedienhinweise. Eine Zunahme um bspw. 135 mV entspricht einem inneren Zustand, in welchem optische Veränderungen in der Materialbeschaffenheit beobachtet werden, und lässt sich daher als zweite Alarmschwelle definieren. Eine Zunahme um bspw. 160 mV entspricht beispielsweise einem Überschreiten des maximal spezifizierten Betriebsparameters und würde somit die dritte Alarmschwelle für das Auslösen von Warnhinweisen und - signalisierungen definieren.

Bei einer vorteilhaften Ausgestaltung kann vorgesehen sein, dass bei wenigstens einer korrelierenden Größe zwischen wenigstens einer statischen und wenigstens einer dynamischen Zustandsänderung unterschieden wird. Somit ist es mit Hilfe der ermittelten Werte möglich, Effekte auf die Sensorsignale in der Zustandsüberwachung und Fehlererkennung abbildbar darzustellen.

In einer besonders beispielhaften Ausführungsform erlaubt die Kenntnis über einen nicht spezifikationsgemäßen Zustand bzw. die Näherung an einen solchen Zustand das Einleiten rechtzeitiger Service-Maßnahmen (z. B. Tausch des Sensors), um den Nutzer eine verbesserte Verfügbarkeit zuzusichern oder irreversible Veränderungen, welche der Lebensdauer abträglich sind, zu verhindern.

Bei einer vorteilhaften Ausgestaltung kann vorgesehen sein, dass wenigstens eine korrelierende Größe zur Regulierung der Elektrode verwendet wird. Somit lassen sich Aussagen über die maximale Fehlerbehaftung des Sensors treffen und Hinweise darauf ableiten, in welchem Zeitraum die volle Funktionsfähigkeit innerhalb der Spezifikation des Sensors wieder erreicht ist.

Bei einer vorteilhaften Ausgestaltung kann vorgesehen sein, dass wenigstens eine Zustandsgröße und/oder Zustandsaussage einen Hinweis auf eine Vergiftung des Sensors und/oder eine Betriebsunterbrechung und/oder Bestromungsunterbrechung gibt. Somit können schnell Rückschlüsse über den Zustand des Sensors gezogen werden und Bedienhinweise und/oder -Empfehlungen für den Nutzer abgeleitet werden. Besonders vorteilhaft ist, wenn hierbei Bedienhinweise und -Empfehlungen wie bspw. "Messung mit einer maximalen Fehlerbehaftung von []% vom Messwert" oder "erwartete Wartezeit bis zur Rückkehr zur voll spezifizierten Funktionsfähigkeit in []h", abgeleitet und zur Verfügung gestellt werden können.

Bei einer vorteilhaften Ausgestaltung kann vorgesehen sein, dass wenigstens ein Sensor ein Gassensor oder ein Flüssigkeitssensor ist. Somit kann mit Hilfe des erfindungsgemäßen Verfahrens der Zustand des Sensors in verschiedenen Anwendungsgebieten ermittelt werden und dadurch eine höhere Messgenauigkeit erreicht werden.

Beispielweise kann der Gassensor als O₂-Pump-Sensor, CO-, H₂O-, NO-, NO₂₋, NH₃-Sensor ausgebildet sein. In einer weiteren Ausführungsform kann der Sensor ein Flüssigkeitssensor zum Beispiel zur Blutanalyse sein.

Alternativ oder zusätzlich sind zur Lösung der genannten Aufgabe erfindungsgemäß die Merkmale des nebengeordneten, auf einen elektrochemischen Sensor gerichteten Anspruchs vorgesehen. Insbesondere wird somit zur Lösung der genannten Aufgabe bei einer Vorrichtung der eingangs beschriebenen Art erfindungsgemäß vorgeschlagen, dass bei einem
elektrochemischen Sensor mit wenigstens einer Sensingelektrode, einer Gegenelektrode und einer Referenzelektrode eine mit einer Spannung zwischen der Referenzelektrode und der Gegenelektrode korrelierende Größe erfassbar ist. Hierzu können beispielsweise Messmittel zur Erfassung der Größe ausgebildet sein. Somit können hinsichtlich der Verwendung eines Messgerätes mit einem elektrochemischen Sensor beispielsweise Hinweise über den Zustand des Sensors erkannt und ausgegeben werden. Beispielsweise können hierbei Mittel zur Ausführung eines erfindungsgemäßen Verfahrens, insbesondere wie zuvor beschrieben und/oder nach einem der nachstehenden Ansprüche, ausgebildet sein.

Beispielsweise ist es möglich, eine nicht-spezifikationsgemäße Lagerung zu identifizieren und entsprechende Service-Maßnahmen wie beispielsweise den Tausch des Gassensors einzuleiten, um somit eine verbesserte Verfügbarkeit der Messanordnung zuzusichern. Ebenso kann beispielsweise verhindert werden, dass sich der Zustand des Sensors irreversibel verändert und somit für die Lebensdauer des Sensors schädlich ist.

Die Erfindung wird nun anhand eines Ausführungsbeispiels näher beschrieben, ist jedoch nicht auf das Ausführungsbeispiel beschränkt. Weitere Ausführungsbeispiele ergeben sich durch Kombination der Merkmale einzelner oder mehrerer Ansprüche untereinander und/oder mit einzelnen oder mehreren Merkmalen des Ausführungsbeispiels.

Es zeigt:
- Fig. 1: eine dreidimensionale Gesamtansicht eines EC-Sensors,
- Fig. 2: eine schematische Elektrodenanordnung,
- Fig. 3: eine schematische Darstellung der Elektroden und deren ausgebildete Potentiale, und
- Fig. 4: ein Flowchart über den Programmablauf und für Verrechnung.

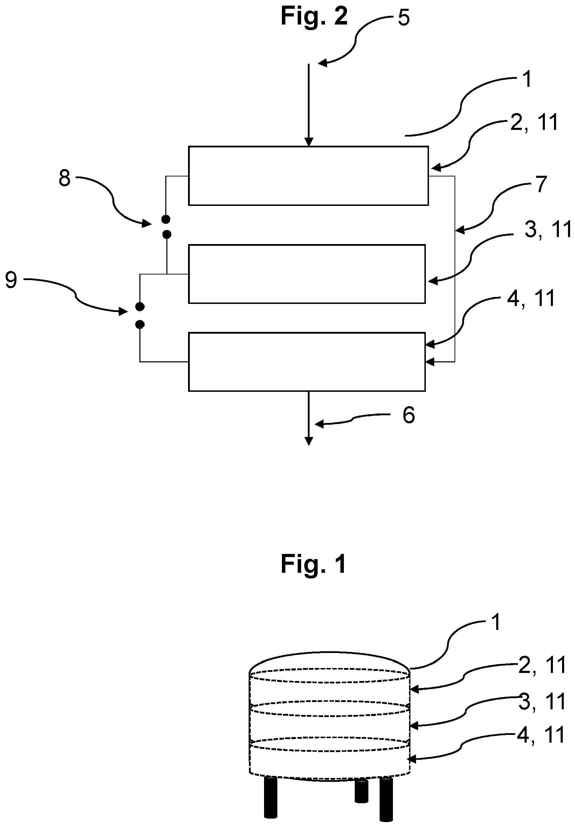

Fig. 1 zeigt eine Anordnung eines erfindungsgemäßen elektrochemischen Sensors 1. Der elektrochemische Sensor 1 umfasst eine Sensingelektrode 2, eine Referenzelektrode 3 und eine Gegenelektrode 4 als Elektroden 11. Derartige elektrochemische Sensoren 1 können beispielsweise Gassensoren oder Flüssigkeitssensoren sein und werden beispielsweise zur Sauerstoffmessung in der Luft oder zur Ammoniakmessung bei der Überwachung in Prozessen verwendet.

Zur Erfassung des Betriebszustandes des Sensors 1 wird eine Größe verwendet, die mit einer Spannung zwischen zwei Elektroden 11, insbesondere mit einer Spannung zwischen der Referenzelektrode 3 und einer Gegenelektrode 4 korreliert.

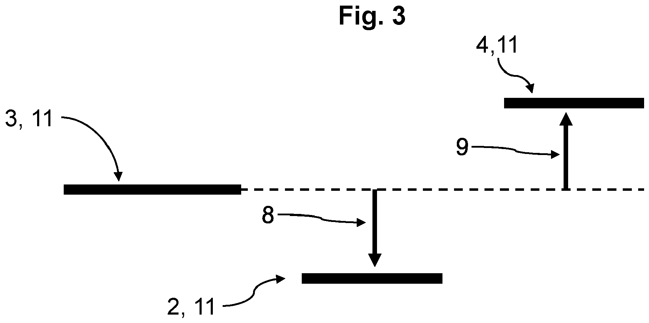

Wie in Figur 3 dargestellt, wird für den Betrieb des Sensors 1 das Potential der Sensingelektrode 2 um bspw. 600 mV gegenüber der Referenzelektrode 3 abgesenkt.

Nach der Bestromung an der Sensingelektrode 2 wird der Sauerstoff reduziert (O₂ +4H⁺+4e → 2H₂O). Um einen Stoff- und Ladungsausgleich herzustellen, muss hierbei eine Gegenreaktion stattfinden. Das bedeutet, dass an der Gegenelektrode 4 eine entgegensetzte Reaktion stattfindet und Wasser elektrolytisch zerlegt und Sauerstoff (2H₂O → O₂ + 4H⁺ 4 e⁻) freigesetzt wird. Dadurch steigt das Potential U_{CE-RE} 9 der Gegenelektrode 4 gegenüber der Referenzelektrode 3. Nach Erreichen eines stabilen Gradienten der Sauerstoffkonzentration zwischen der Sensingelektrode 2 und der Gegenelektrode 4 ist bei konstanter Bestromung eine Gleichgewichtslage vorhanden.

Die Potentialdifferenz U_{SE-RE} 8 wird ausschließlich durch die Regelelektronik vorgegeben, wogegen die Potentialdifferenz U_{CE-RE} 9 das Resultat des tatsächlichen Stoffumsatzes und Transportgeschehens ist, und somit eine korrelierende Größe des Sensors 1 ist.

Mit Hilfe der Messung der Potentialdifferenz U_{CE-RE} 9 als charakteristische Größe ist es demnach möglich, die tatsächliche Potentiallage der Referenzelektrode 3 und der Gegenelektrode 2 als korrelierende Größe zu ermitteln und zur Bestimmung und Bewertung des Betriebszustands des Sensors 1 heranzuziehen. Die Potentialdifferenz U_{CE-RE} 9 wird durch die Umgebungsgröße bzw. Einsatzbedingungen wie Temperatur oder Feuchtegehalt der Luft, sowie durch spezifische Störgrößen wie beispielsweise Lösungsmittel-Dämpfe beeinflusst.

Um keine Beeinträchtigung bei der eigentlichen Messung zwischen der Sensingelektrode 2 und der Referenzelektrode 3 zu erhalten, sollte die Messung im Idealfall so gut wie möglich stromlos durchgeführt werden.

Fig. 3 zeigt in einer schematischen Darstellung die Elektroden 11 und deren ausgebildete Potentiale 8, 9 in beispielhafter Weise für einen O₂ -Sensor bei stabilen Standardbedingungen (25°C, 1 atm) . Die Potentialdifferenz U_{CE-RE} 9 zwischen Gegenelektrode 4,11 und Referenzelektrode 3,11 wird unter Standardbedingungen einen charakteristischen Erwartungswert von ca. 550 mV ergeben. Dieser Wert dient für weitere Messungen als Referenzwert. Die Potentiallage der Gegenelektrode 4,11 ist maßgeblich abhängig von der Menge an vorhandenem O₂. Entsteht weniger O₂ aufgrund von beispielsweise bestandenen oder derzeit bestehenden Umgebungsbedingungen und/oder Einsatzbedingungen, sinkt die Potentiallage der Gegenelektrode 4 ab und führt zu einer geänderten Potentialdifferenz U_{CE-RE} 9.

Dadurch lassen sich beispielsweise verschiedene Schwellenwerte definieren, die bestimmte Gegebenheiten und/oder Betriebszustände des Sensors widerspiegeln. So können beispielsweise Schwellenwerte, die in Abhängigkeit einer zeitlichen Entwicklung ermittelt werden, eine Aussage über den Zustand beispielsweise bezüglich des Grades der Austrocknung des Sensors 1 geben.

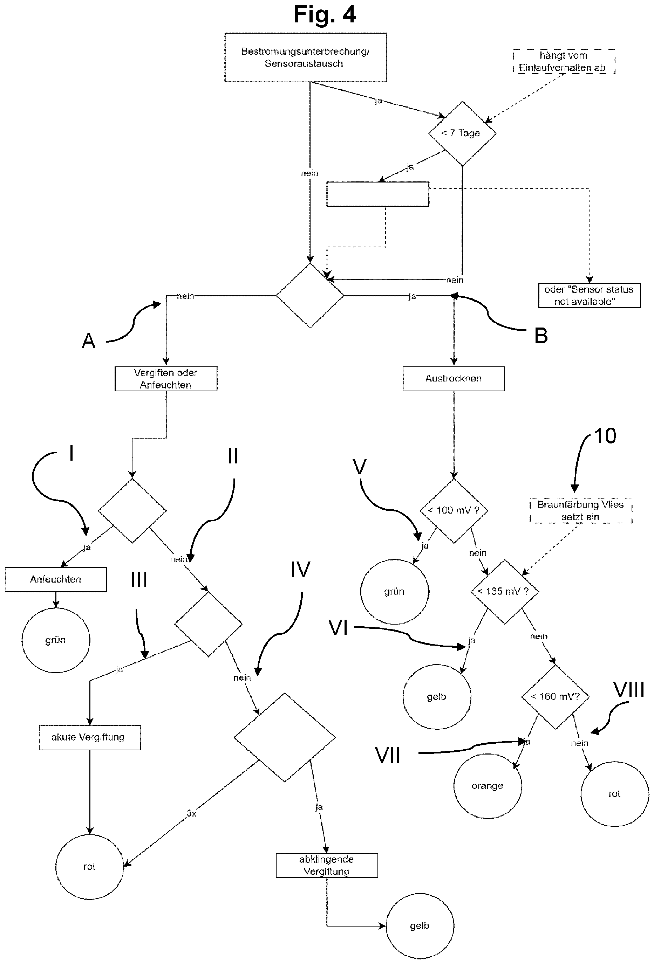

Fig. 4 zeigt in beispielhafter Weise einen Programmablauf als Flowchart, welcher die bereits zuvor benannten Fehlereffekte berücksichtigt und die Verkettung und Verrechnung der notwendigen Sensorsignale in einer kausalen Abfolge exemplarisch darstellt.

Idealerweise sind die Verrechnungen möglichst einfach ausgelegt und können somit in die vorgegebene Microcontroller-Architektur eingebettet werden. Der Flowchart berücksichtigt hierbei die gängigen Ausgangs- und Randbedingungen bei der Verwendung des elektrochemischen Sensors 1 im Messgerät.

Voraussetzung für die Überprüfung des Betriebszustands des elektrochemischen Sensors 1 ist, dass dieser über einen genügend langen Zeitraum beispielsweise über 7 Tage bestromt war, und somit Gleichgewichtsbedingungen vorlagen. Ist dies der Fall, wird die aktuell ermittelte Potentialdifferenz 9 (U_{CE-RE}) zwischen Referenzelektrode 3 und Gegenelektrode 4 mit der bei der letzten Geräteverwendung erfassten Potentialdifferenz (U_{CE-RE}, ₙ₋₁) als Referenzwert verglichen. Liegt dieser nicht vor, kann der Wert durch die ermittelte Potentialdifferenz bei Produktionsabgleich (U_{CE-RE}, _{SPC}) kompensiert werden. Mit Hilfe der korrelierenden Größe ist es möglich, eine aktuelle Zustandsaussage und/oder eine Zustandsgröße des Sensors 1 zu ermitteln.

Beispielsweise kann eine Zustandsgröße und/oder eine Zustandsaussage einen Hinweis auf eine Vergiftung des Sensors, eine Betriebsunterbrechung oder eine Bestromungsunterbrechung geben.

Dabei ist es, wie in Fig. 4 dargestellt, möglich, zu unterscheiden, ob eine statische oder dynamische Zustandsänderung vorliegt. Auf Basis dieser Angaben zur korrelierenden Größe kann beispielsweise eine Nachregulierung der Elektroden 11 durchgeführt werden.

Im Folgenden werden verschiedene Zustände des elektrochemischen Sensors beschrieben. Dabei kann aus der korrelierenden Größe beispielsweise eine Umgebungsbedingung und/oder eine Einsatzbedingung ermittelt und dargestellt werden. Die korrelierende Größe wird dabei aufgezeichnet und an eine Auswerteinheit übermittelt.

Ist die Differenz der beiden Werte beispielsweise größer als 0, Fall A, wird geprüft, ob der Sensor vom trockenen Zustand rückfeuchtet oder eine Kontamination des Sensors vorliegt.

Findet kein Stromfluss 7 (I_{sens,i}-I_{sens,n-1} = 0+ε) statt, Zweig I, ist der Sensor am "Rückfeuchten" und somit normal betriebsbereit, und das Signal ist grün.

Ist der Wert des Stromflusses 7 ungleich 0 (I_{sens,i}-I_{sens,n-1} ≠ 0), Zweig II, werden beispielsweise die folgenden Bedingungen unterschieden:
Ist der Stromfluss 7 größer als 0 (I_{sens,i}-I_{sens,n-1} < 0), Zweig III, handelt es sich um eine potenzielle Vergiftung. Beispielsweise kann hier eine Alarmmeldung, dass ein Messen nicht möglich ist sowie ein rotes Signal aufleuchten.

Ist der Stromfluss 7 kleiner als 0 (I_{sens,i}-I_{sens,n-1} > 0), Zweig IV, so ist die Vergiftung des Sensors am Abklingen. Beispielsweise kann das Messgerät Hinweise zum Messen abgegeben, wie zum Beispiel "Messen möglich mit erwarteter verringerter Genauigkeit von 3% vom Messwert" oder "Messen außerhalb der Spezifikation", und zusätzlich erscheint eine gelbe Signalmeldung.

Im Falle, dass die Potentialdifferenz 9 größer als 0 ist, Fall B, ist der Sensor am Austrocknen.

Hierbei können beispielsweise verschiedene Bedingungen des Zustands des elektrochemischen Sensors 1 unterschieden werden:
Ist die Potentialdifferenz 9 kleiner als bspw. 100 mV, Zweig V, befindet sich der Sensor im Zustandsfenster für Normalbetrieb, und eine grüne Signalmeldung erscheint.

Ist die Potentialdifferenz 9 über bspw. 100 mV, Zweig VI, befindet sich der Zustand des Sensors beispielsweise außerhalb der typischen Einsatzbedingungen, und ein Hinweis bzw. eine gelbe Signalmeldung erscheint.

Bei einer Potentialdifferenz 9 größer als bspw. 135 mV, Zweig VII, können erste optische Veränderungen im Materialgefüge des elektrochemischen Sensors 1 auftreten. Beispielsweise setzt hier eine Braunfärbung des Vlies ein. Die Veränderungen im Materialgefüge können zu einer Beeinträchtigung der Lebensdauer des Sensors führen, und um dies zu vermeiden, wird ein Warnhinweis in Form einer orangen Signalmeldung abgesetzt.

Liegt beispielsweise eine Potentialdifferenz 9 größer als bspw. 160 mV vor, Zweig VIII, wird der Sensor außerhalb seiner Spezifikation eingesetzt. Das Messgerät setzt daraufhin beispielsweise einen Nutzerhinweis ab, dass der Sensor außerhalb der Spezifikation gelagert worden ist, und ein rotes Warnsignal erscheint.

Die Erfindung betrifft die Verwendung einer mit einer Spannung zwischen zwei Elektroden korrelierenden Größe eines elektrochemischen Sensors 1, zur Erfassung seines Betriebszustands. Die Erfindung betrifft weiterhin ein Verfahren zur Erfassung eines Betriebszustandes eines elektrochemischen Sensors 1, wobei eine mit einer Spannung zwischen Referenzelektrode 3 und Gegenelektrode 4 korrelierende Größe erfasst wird. Die Erfindung umfasst des Weiteren eine Vorrichtung eines elektrochemischen Sensors 1, mit einer Sensingelektrode 2, einer Referenzelektrode 3 und einer Gegenelektrode 4, wobei eine mit der Spannung zwischen der Referenzelektrode 3 und Gegenelektrode 4 korrelierende Größe erfasst wird.

### Bezugszeichenliste

- 1: Sensor
- 2: Sensingelektrode (SE)
- 3: Referenzelektrode (RE)
- 4: Gegenelektrode (CE)
- 5: Zufluss des Messfluids
- 6: Abfluss
- 7: Stromfluss Iₛ
- 8: Potentialdifferenz U_{SE-RE}
- 9: Potentialdifferenz U_{CE-RE}
- 10: Zustandsänderung Sensor
- 11: Elektrode
- A: Fall
- B: Fall
- I: Bedingung
- II: Bedingung
- III: Bedingung
- IV: Bedingung
- V: Bedingung
- VI: Bedingung
- VII: Bedingung
- VIII: Bedingung

## Patentansprüche

1. Verwendung einer mit einer Spannung zwischen zwei Elektroden (11), insbesondere mit einer Spannung zwischen einer Referenzelektrode (3) und einer Gegenelektrode (4), korrelierenden Größe eines elektrochemischen Sensors (1) zur Erfassung seines Betriebszustands.

2. Verfahren zur Erfassung eines Betriebszustands eines elektrochemischen Sensors (1), wobei der Sensor wenigstens eine Sensingelektrode (2), eine Gegenelektrode (4) und eine Referenzelektrode (3) umfasst, **dadurch gekennzeichnet, dass** wenigstens eine mit einer Spannung zwischen zwei Elektroden (11), insbesondere zwischen der Referenzelektrode (3) und der Gegenelektrode (4), korrelierende Größe erfasst wird.

3. Verfahren nach dem vorangegangenen Anspruch, **dadurch gekennzeichnet, dass** die wenigstens eine mit einer Spannung zwischen der Referenzelektrode (3) und der Gegenelektrode (4) korrelierende Größe ausgewertet, insbesondere mit einem Referenzwert verglichen, wird.

4. Verfahren nach einem der vorangegangenen Ansprüche, **dadurch gekennzeichnet, dass** als die korrelierende Größe eine Potentialdifferenz zwischen den wenigstens zwei Elektroden (11) erfasst, insbesondere zwischen wenigstens einer ersten und wenigstens einer zweiten Elektrode (11) und/oder wenigstens einer dritten Elektrode (11) des Sensors ermittelt wird.

5. Verfahren nach einem der oben bezeichneten Ansprüche,
**dadurch gekennzeichnet, dass** wenigstens eine erste Elektrode (11) als Referenzelektrode (3) und wenigstens eine zweite Elektrode (11) als Gegenelektrode (4) ausgebildet ist.

6. Verfahren nach einem der oben bezeichneten Ansprüche, **dadurch gekennzeichnet, dass** die korrelierende Größe stromlos erfasst wird und/oder dass als korrelierende Größe die Spannung zwischen der Referenzelektrode (3) und der Gegenelektrode (4) gemessen wird.

7. Verfahren nach einem der oben bezeichneten Ansprüche, **dadurch gekennzeichnet, dass** die korrelierende Größe in Abhängigkeit von einer zeitlichen Entwicklung und/oder im Vergleich mit einem Referenzwert erfasst wird.

8. Verfahren nach einem der oben bezeichneten Ansprüche, **dadurch gekennzeichnet, dass** eine Kompensation des wenigstens einen Messwerts stattfindet.

9. Verfahren nach einem der oben bezeichneten Ansprüche, **dadurch gekennzeichnet, dass** aus wenigstens einer korrelierenden Größe wenigstens eine Zustandsgröße und/oder Zustandsaussage ermittelt wird.Verfahren nach einem der vorangehenden Ansprüche, **dadurch gekennzeichnet, dass** aus wenigstens einer korrelierenden Größe wenigstens eine Umgebungsbedingung und/oder wenigstens eine Einsatzbedingung ermittelt wird.

10. Verfahren nach einem der vorangehenden Ansprüche, **dadurch gekennzeichnet, dass** wenigstens eine korrelierende Größe aufgezeichnet wird und an wenigstens eine Auswerteeinheit übermittelt wird.

11. Verfahren nach einem der vorangehenden Ansprüche, **dadurch gekennzeichnet, dass** bei wenigstens einer korrelierende Größe zwischen wenigsten einer statischen und wenigstens einer dynamischen Zustandsänderung unterschieden wird.

12. Verfahren nach einem der vorangehenden Ansprüche, **dadurch gekennzeichnet, dass** wenigstens eine korrelierende Größe zur Nachregulierung der Elektrode verwendet wird.

13. Verfahren nach einem der vorangehenden Ansprüche, **dadurch gekennzeichnet, dass** wenigstens eine Zustandsgröße und/oder eine Zustandsaussage einen Hinweis auf eine Vergiftung des Sensors (1) und/oder eine Betriebsunterbrechung und/oder Bestromungsunterbrechung gibt, und/oder dass bei einer Überschreitung eines definierten Schwellwertes eine Sicherheitsabschaltung des Sensors erfolgt.

14. Verfahren nach einem der vorherigen Ansprüche, **dadurch gekennzeichnet, dass** der Sensor (1) ein Gassensor oder ein Flüssigkeitssensor ist.

15. Elektrochemischer Sensor (1) mit wenigstens einer Sensingelektrode (2), einer Gegenelektrode (3) und einer Referenzelektrode (4), **dadurch gekennzeichnet, dass** eine mit einer Spannung zwischen der Referenzelektrode (3) und Gegenelektrode (4) korrelierende Größe erfassbar ist, insbesondere wobei Mittel zur Ausführung eines Verfahrens nach einem der vorangehenden Ansprüche ausgebildet sind.

## Geänderte Patentansprüche

### Geänderte Patentansprüche gemäss Regel 137(2) EPÜ.

1. Verwendung einer mit einer Spannung zwischen zwischen einer Referenzelektrode (3) und einer Gegenelektrode (4) korrelierenden Größe eines elektrochemischen Sensors (1) zur Erfassung seines Betriebszustands im Normalbetrieb des Sensors (1), wobei für den Normalbetrieb des Sensors (1) das Potential einer Sensingelektrode (2) gegenüber der Referenzelektrode (3) abgesenkt wird, wobei die Sensingelektrode (2) mit einem konstanten Strom betrieben wird, so dass eine Gleichgewichtslage vorliegt, wobei eine Potentialdifferenz U_{CE-RE} (9) zwischen der Referenzelektrode (3) und der Gegenelektrode (4), als korrelierende Größe erfasst wird und dass aus der korrelierenden Größe wenigstens eine Zustandsgröße und/oder Zustandsaussage des Sensors (1) ermittelt wird.

2. Verfahren zur Erfassung eines Betriebszustands eines elektrochemischen Sensors (1) im Normalbetrieb des Sensors (1) wobei der Sensor (1) wenigstens eine Sensingelektrode (2), eine Gegenelektrode (4) und eine Referenzelektrode (3) umfasst, **dadurch gekennzeichnet, dass** für den Normalbetrieb des Sensors das Potential der Sensingelektrode (2) gegenüber der Referenzelektrode (3) abgesenkt wird, wobei die Sensingelektrode (2) mit einem konstanten Strom betrieben wird, so dass eine Gleichgewichtslage vorliegt, dass eine Potentialdifferenz U_{CE-RE} (9) zwischen der Referenzelektrode (3) und der Gegenelektrode (4), als korrelierende Größe erfasst wird und dass aus der korrelierenden Größe wenigstens eine Zustandsgröße und/oder Zustandsaussage des Sensors (1) ermittelt wird.

3. Verfahren nach dem vorangegangenen Anspruch, **dadurch gekennzeichnet, dass** die wenigstens eine mit einer Spannung zwischen der Referenzelektrode (3) und der Gegenelektrode (4) korrelierende Größe ausgewertet, insbesondere mit einem Referenzwert verglichen, wird.

4. Verfahren nach einem der vorangegangenen Ansprüche, **dadurch gekennzeichnet, dass** als die korrelierende Größe eine Potentialdifferenz zwischen den wenigstens zwei Elektroden (11) erfasst, insbesondere zwischen wenigstens einer ersten und wenigstens einer zweiten Elektrode (11) und/oder wenigstens einer dritten Elektrode (11) des Sensors ermittelt wird.

5. Verfahren nach einem der oben bezeichneten Ansprüche,
**dadurch gekennzeichnet, dass** wenigstens eine erste Elektrode (11) als Referenzelektrode (3) und wenigstens eine zweite Elektrode (11) als Gegenelektrode (4) ausgebildet ist.

6. Verfahren nach einem der oben bezeichneten Ansprüche,
**dadurch gekennzeichnet, dass** die korrelierende Größe stromlos erfasst wird und/oder dass als korrelierende Größe die Spannung zwischen der Referenzelektrode (3) und der Gegenelektrode (4) gemessen wird.

7. Verfahren nach einem der oben bezeichneten Ansprüche,
**dadurch gekennzeichnet, dass** die korrelierende Größe in Abhängigkeit von einer zeitlichen Entwicklung und/oder im Vergleich mit einem Referenzwert erfasst wird.

8. Verfahren nach einem der oben bezeichneten Ansprüche,
**dadurch gekennzeichnet, dass** aus wenigstens einer korrelierenden Größe wenigstens eine Umgebungsbedingung und/oder wenigstens eine Einsatzbedingung ermittelt wird.

9. Verfahren nach einem der vorangehenden Ansprüche, **dadurch gekennzeichnet, dass** wenigstens eine korrelierende Größe aufgezeichnet wird und an wenigstens eine Auswerteeinheit übermittelt wird.

10. Verfahren nach einem der vorangehenden Ansprüche, **dadurch gekennzeichnet, dass** bei wenigstens einer korrelierende Größe zwischen wenigsten einer statischen und wenigstens einer dynamischen Zustandsänderung unterschieden wird.

11. Verfahren nach einem der vorangehenden Ansprüche, **dadurch gekennzeichnet, dass** wenigstens eine korrelierende Größe zur Nachregulierung der Elektrode verwendet wird.

12. Verfahren nach einem der vorangehenden Ansprüche, **dadurch gekennzeichnet, dass** wenigstens eine Zustandsgröße und/oder eine Zustandsaussage einen Hinweis auf eine Vergiftung des Sensors (1) und/oder eine Betriebsunterbrechung und/oder Bestromungsunterbrechung gibt, und/oder dass bei einer Überschreitung eines definierten Schwellwertes eine Sicherheitsabschaltung des Sensors erfolgt.

13. Verfahren nach einem der vorherigen Ansprüche, **dadurch gekennzeichnet, dass** der Sensor (1) ein Gassensor oder ein Flüssigkeitssensor ist.

14. Elektrochemischer Sensor (1) mit wenigstens einer Sensingelektrode (2), einer Gegenelektrode (3) und einer Referenzelektrode (4), wobei Mittel zur Ausführung eines Verfahrens nach einem der vorangehenden Ansprüche ausgebildet sind, **dadurch gekennzeichnet, dass** für den Normalbetrieb des Sensors das Potential der Sensingelektrode (2) gegenüber der Referenzelektrode (3) abgesenkt ist, wobei die Sensingelektrode (2) mit einem konstanten Strom betrieben wird, so dass eine Gleichgewichtslage vorliegt, dass eine Potentialdifferenz U_{CE-RE} (9) zwischen der Referenzelektrode (3) und Gegenelektrode (4) als korrelierende Größe erfassbar ist, und dass aus der korrelierenden Größe wenigstens eine Zustandsgröße und/oder Zustandsaussage des Sensors (1) ermittelt wird.
